# EUROPEAN PATENT APPLICATION

(11) **EP 4 310 635 A1**
(43) Date of publication of application: **24.01.2024**
(21) Application number: 22770813.8
(22) Date of filing: 12.01.2022
(51) Int. Cl.: G06F 3/01

(54) **INFORMATION PROCESSING DEVICE, INFORMATION PROCESSING METHOD, AND PROGRAM**

(30) Priority: 18.03.2021 JP 2021044763
(71) Applicant: Sony Group Corporation, Tokyo 108-0075 (JP)
(72) Inventor: NAKAGAWA, Yusuke, Tokyo 108-0075 (JP); ITO, Osamu, Tokyo 108-0075 (JP)
(74) Representative: MFG Patentanwälte Meyer-Wildhagen Meggle-Freund Gerhard PartG mbB
(86) International application number: PCT/JP2022/000667
(87) International publication number: WO 2022/196051

(57) **Abstract**

An information processing apparatus according to an embodiment of the present technology includes a conversion unit. The conversion unit converts a haptic signal on the basis of device information regarding a haptic device that outputs the haptic signal. This makes it possible to exert a richer haptic effect. Further, shortage of content such as content corresponding to the device can be eliminated. Furthermore, it is possible to shorten the time required for conversion because the vibration data once converted is held by a cloud side.

## Description

### Technical Field

The present technology relates to an information processing apparatus, an information processing method, and a program, which are applicable to a vibration device or the like.

### Background Art

Patent Literature 1 describes an automatic generating method for haptic settings used to generate favorable haptic effects. In this method, haptic software applications are associated with a plurality of haptic settings, and when a user loads a haptic software application, a favorable set of haptic settings is output on the basis of the haptic settings. This aims at generating a favorable haptic effect for each user (paragraphs [0029] to [0037] of the specification, Fig. 4, and the like of Patent Literature 1).

### Citation List

### Patent Literature

Patent Literature 1: Japanese Patent Application Laid-open No. 2017-111789

### Disclosure of Invention

### Technical Problem

Regarding such a vibration device, there is a demand for a technology capable of exerting a richer haptic effect.

In view of the circumstances as described above, it is an object of the present technology to provide an information processing apparatus, an information processing method, and a program that are capable of exerting a richer haptic effect.

### Solution to Problem

In order to achieve the above object, an information processing apparatus according to an embodiment of the present technology includes a conversion unit.

The conversion unit converts a haptic signal on the basis of device information regarding a haptic device that outputs the haptic signal.

In this information processing apparatus, the haptic signal is converted on the basis of device information regarding a haptic device that outputs a haptic signal. This makes it possible to exert a richer haptic effect.

The device information may include a parameter regarding the haptic signal that can be output by the haptic device.

The parameter may include at least one of a peak frequency of the haptic device, a peak acceleration of the haptic device, or a broadband acceleration of the haptic device.

The conversion unit may convert the haptic signal on the basis of the device information and another device information regarding another haptic device that has produced content including the haptic signal.

The other device information may include another parameter regarding the haptic signal that can be output by the other haptic device. In this case, the other parameter may include at least one of a peak frequency of the other haptic device, a peak acceleration of the other haptic device, or a broadband acceleration of the other haptic device.

The conversion unit may perform conversion, when the peak frequency of the haptic device and the peak frequency of the other haptic device are different from each other, such that the peak frequency of the haptic device coincides with the peak frequency of the other haptic device.

The conversion unit may perform conversion, when the peak acceleration of the haptic device and the peak acceleration of the haptic signal are different from each other, such that the peak acceleration of the haptic device coincides with the peak acceleration of the other haptic device.

The conversion unit may perform conversion, when the broadband acceleration of the haptic device and the broadband acceleration of the haptic signal are different from each other, such that the broadband acceleration of the haptic device coincides with the broadband acceleration of the other haptic device.

The conversion unit may convert the haptic signal on the basis of a questionnaire regarding the converted haptic signal.

The questionnaire may be held together with an attribute of a user who has answered the questionnaire. In this case, the conversion unit may convert the haptic signal on the basis of a questionnaire result held for each attribute.

The attribute may include at least one of content including the haptic signal, the user, a group to which the user belongs, or a region.

The questionnaire may include a questionnaire regarding a specific scene of content including the haptic signal.

The scene may include a scene regarding a vibration expression provided by the haptic device.

The questionnaire may present whether or not a delay is caused between the specific scene and the vibration expression to a user.

The device information may include position information of a vibration device that is mounted on the haptic device.

The conversion unit may convert the haptic signal on the basis of the position information.

An information processing method according to an embodiment of the present technology is a control method executed by a computer system and includes converting a haptic signal on the basis of device information regarding a haptic device that outputs the haptic signal.

A program according to an embodiment of the present technology causes a computer system to execute the following step of converting a haptic signal on the basis of device information regarding a haptic device that outputs the haptic signal.

### Brief Description of Drawings

[Fig. 1] Fig. 1 is a diagram schematically showing a haptic signal conversion system.
[Fig. 2] Fig. 2 is a block diagram showing a functional configuration of a conversion algo server shown in Fig. 1.
[Fig. 3] Fig. 3 is a sequence diagram showing conversion of a haptic signal.
[Fig. 4] Fig. 4 is a table showing examples of device information.
[Fig. 5] Fig. 5 is a graph showing vibration characteristics of a device.
[Fig. 6] Fig. 6 is a graph showing conversion examples of a producer device and a local device.
[Fig. 7] Fig. 7 is a graph showing conversion examples in a pattern A and a pattern C.
[Fig. 8] Fig. 8 is a graph showing conversion examples in a pattern B and a pattern D.
[Fig. 9] Fig. 9 is a graph showing a conversion example in a pattern E.
[Fig. 10] Fig. 10 is a diagram showing specific examples of questionnaires.
[Fig. 11] Fig. 11 is a diagram showing examples of the device information.
[Fig. 12] Fig. 12 is a diagram showing another example of the device information.
[Fig. 13] Fig. 13 is a diagram showing another example of the device information.
[Fig. 14] Fig. 14 is a diagram showing an example of a method of holding questionnaire results.
[Fig. 15] Fig. 15 is a block diagram showing a hardware configuration example of the conversion algo server.

### Mode(s) for Carrying Out the Invention

Hereinafter, an embodiment according to the present technology will be described with reference to the drawings.

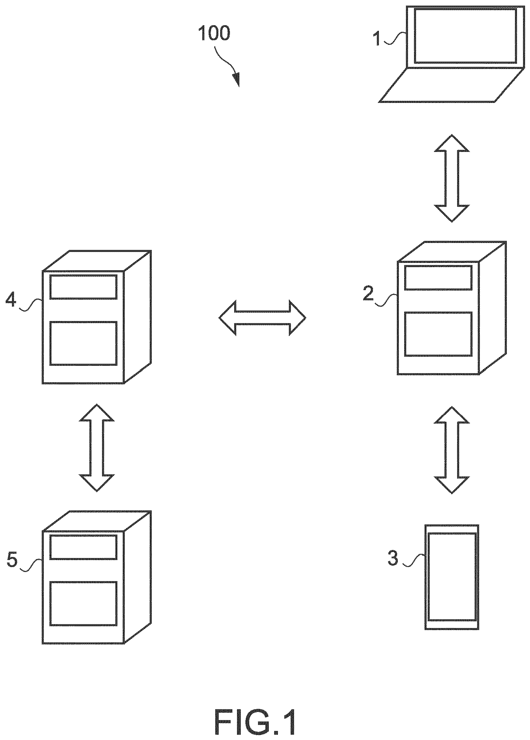

Fig. 1 is a diagram schematically showing a haptic signal conversion system according to the present technology.

As shown in Fig. 1, a haptic signal conversion system 100 includes a producer device 1, a main server 2, a local device 3, a haptic data server 4, and a conversion algo server 5.

The producer device 1 is a device of a producer who has produced a haptic signal for generating a haptic effect. In this embodiment, content including various haptic signals is uploaded to the main server 2 by the producer. Further, device information of the producer device, which has produced the content, is uploaded to the main server 2 together with the content.

Note that the producer device 1 is not limited, and any device such as a laptop personal computer (PC), a PC, a tablet terminal, or a smartphone may be used.

The main server 2 is a server that stores content and provides a cloud service. In this embodiment, the main server 2 stores the content uploaded from the producer device 1. The main server 2 transmits haptic data of the content to the haptic data server 4. Further, the main server 2 transmits device information of the local device 3, which requests the content, to the haptic data server 4.

The main server 2 transmits the content to the local device 3 in response to a search for content from the local device 3. Further, in this embodiment, a questionnaire regarding the content is transmitted from the local device 3 to the main server 2, and the main server 2 transmits the questionnaire to the conversion algo server 5.

The local device 3 is a device that outputs a haptic signal and is capable of generating a haptic effect for a user on the basis of the haptic signal included in the content. For example, the local device 3 includes a linear vibration actuator or an eccentric motor. Further, for example, the local device 3 includes any device such as a smartphone or a game controller (game console).

The device information is information regarding a haptic signal that can be output by a device. In this embodiment, the device information includes at least one of a peak frequency, a peak acceleration, or an acceleration in a broad bandwidth (e.g., 200 Hz or more) (hereinafter, described as broadband acceleration), which can be output by the device. In other words, the device information can also be information of a haptic effect that can be expressed by the device.

Further, the device information includes the number of vibration devices (e.g., actuator and eccentric motor) and position information thereof.

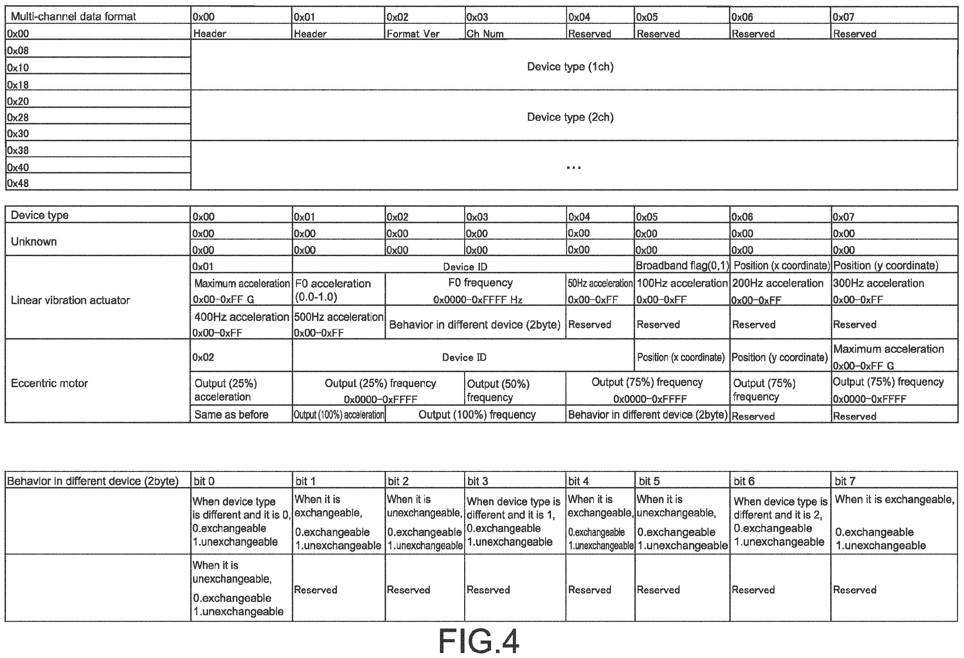

In addition to the above, as shown in Fig. 4, the device information may include various types of information and may include information other than the example shown in Fig. 4.

Hereinafter, the device information of the producer device 1 will be referred to as producer device information, and the device information of the local device 3 will be referred to as local device information.

The haptic data server 4 stores haptic data regarding a haptic signal included in the content. In this embodiment, the haptic data includes a vibration track type, a vibration data type, and a vibration pattern type.

The vibration track type is characterized in that vibration data is mixed down into one. For example, the vibration track type includes movies, music, and the like. The data format is compression or non-compression. In this embodiment, a data holding method for the vibration track type is linked to the content. Further, the device information regarding the vibration track type is the producer device information.

Further, in this embodiment, only one kind of a conversion algorithm of the vibration track type can be selected. Further, in a conversion method for the vibration track type, after content is uploaded to the main server 2, the main server 2 transmits the producer device information and the content to the conversion algo server 5, and the haptic data is converted. In other words, the number of times of conversion of the vibration track type is basically one.

The vibration data type is characterized in that simple haptic data is held in the content, and mixed and output in accordance with a reproduction situation at the time of reproduction. For example, the vibration data type includes a game or the like. The data format is non-compression. Further, if the haptic data is compressed, the haptic data is decompressed when uploaded to the main server 2. In this embodiment, a data holding method for the vibration data type is linked to the content. Further, the device information regarding the vibration data type is the producer device information.

Further, in this embodiment, a conversion algorithm of the vibration data type can be selected for each piece of the haptic data. Further, in a conversion method for the vibration data type, after content is uploaded to the main server 2, the main server 2 transmits the producer device information and the content to the conversion algo server 5, and the haptic data is converted. For the number of times of conversion of the vibration data type, conversion is performed for each piece of vibration data. In other words, in the case of n pieces of vibration data, the number of times of conversion is n.

The vibration pattern type is characterized in that patterned data is held and the content holds a pattern number thereof. For example, the vibration pattern type includes a mobile or the like. The data format is non-compression. In this embodiment, a data holding method for the vibration pattern type is linked to the main server 2. Further, the device information regarding the vibration pattern type is the producer device information.

Further, in this embodiment, the vibration pattern type does not need conversion basically. Examples in which conversion of the vibration pattern type is necessary include a case of being connected with an external apparatus. In a conversion method at that time, conversion is performed similarly to the vibration data type. In other words, in the vibration pattern type, conversion is performed for each connection with an external apparatus.

The conversion algo server 5 converts the haptic signal on the basis of the local device information regarding the local device 3 that outputs a haptic signal.

Since the content and haptic signal uploaded to the main server 2 are produced by the producer device 1, there is a possibility that when they are output from the local device 3, a haptic effect assumed by the producer is not correctly generated. In other words, in order to generate a haptic effect desired by the user, it is desirable to convert a haptic signal on the basis of the local device information that is different for each local device 3.

In this embodiment, the conversion algo server 5 converts a parameter of the haptic signal on the basis of the local device information. The parameter of the haptic signal includes a peak frequency, a peak acceleration, and a broadband acceleration. In other words, in this embodiment, the conversion algo server 5 converts a transfer coefficient of the peak frequency, a conversion coefficient of the peak acceleration, and a conversion coefficient of the broadband acceleration on the basis of the producer device information and the local device information.

Further, the conversion algo server 5 converts a parameter of the haptic signal on the basis of a questionnaire regarding the converted haptic signal. For example, the conversion coefficient of the broadband acceleration is converted on the basis of a user questionnaire result on whether a vibration expression of the content has been rich or not.

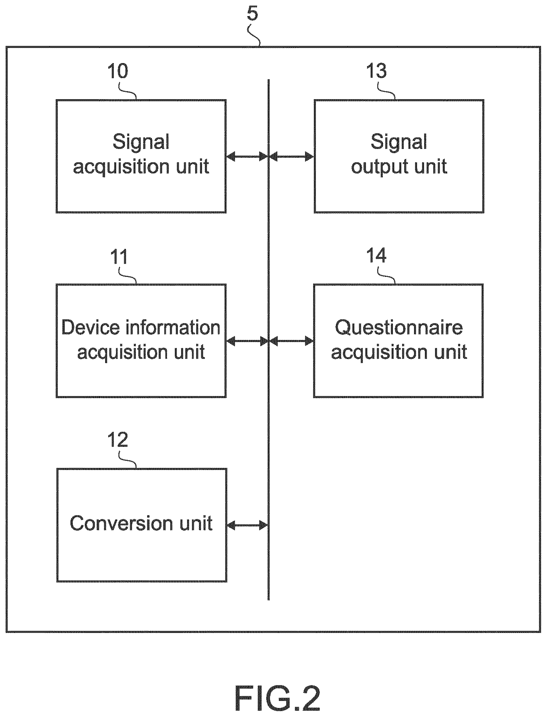

Fig. 2 is a block diagram showing a functional configuration of the conversion algo server 5 shown in Fig. 1.

As shown in Fig. 2, the conversion algo server 5 includes a signal acquisition unit 10, a device information acquisition unit 11, a conversion unit 12, a signal output unit 13, and a questionnaire acquisition unit 14.

The signal acquisition unit 10 acquires a haptic signal of the content. In this embodiment, the signal acquisition unit 10 acquires a haptic signal of the content desired by the user from the haptic data server 4. The acquired haptic signal is supplied to the conversion unit 12.

The device information acquisition unit 11 acquires the producer device information and the local device information. In this embodiment, the device information acquisition unit 11 supplies the producer device information and the local device information to the conversion unit 12.

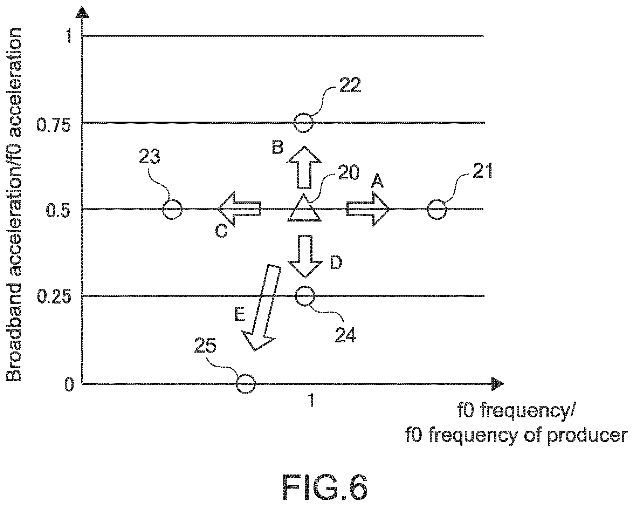

The conversion unit 12 converts the haptic signal. In this embodiment, the conversion unit 12 converts the haptic signal by the method to be described with reference to Figs. 6 to 9 on the basis of the producer device information and the local device information. Further, in this embodiment, the haptic signal converted by the conversion unit 12 is supplied to the signal output unit 13.

Further, the conversion unit 12 converts the converted haptic signal on the basis of the result of the questionnaire regarding the converted haptic signal. In other words, a haptic signal conversion algorithm is repeatedly corrected for each of the user questionnaire results, so that a haptic effect desired by the user can be generated.

The signal output unit 13 outputs the haptic signal converted by the conversion unit 12. In this embodiment, the signal output unit 13 supplies the haptic signal to the haptic data server 4.

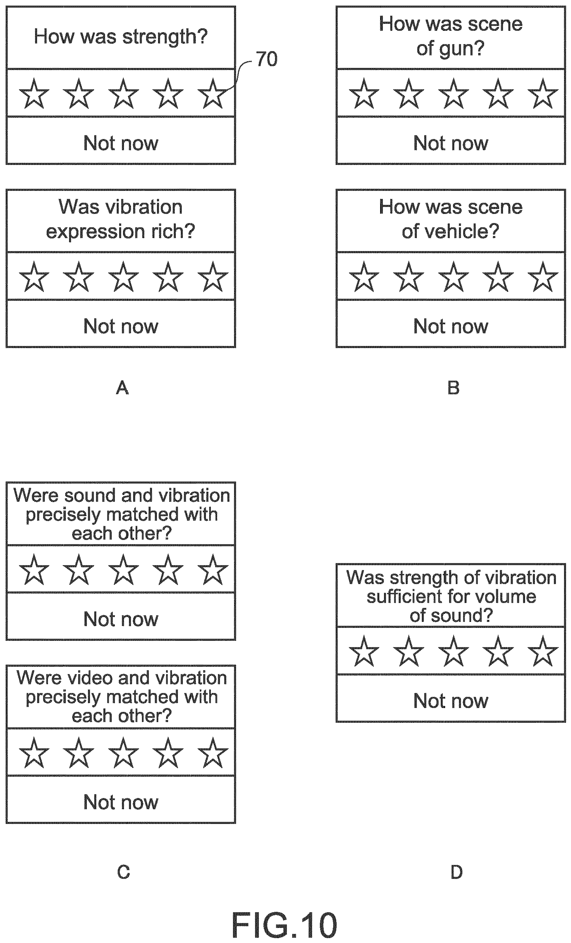

The questionnaire acquisition unit 14 acquires a questionnaire regarding the converted haptic signal. Examples of the questionnaire and the specific examples of the conversion will be described with reference to Fig. 10. In this embodiment, a questionnaire result answered by the user is supplied to the conversion unit 12.

Note that in this embodiment the producer device 1 corresponds to another haptic device that has produced content including a haptic signal.

Note that in this embodiment the local device 3 corresponds to a haptic device that outputs a haptic signal.

Note that in this embodiment the conversion algo server 5 corresponds to an information processing apparatus including a conversion unit that converts a haptic signal on the basis of device information regarding the haptic device that outputs a haptic signal.

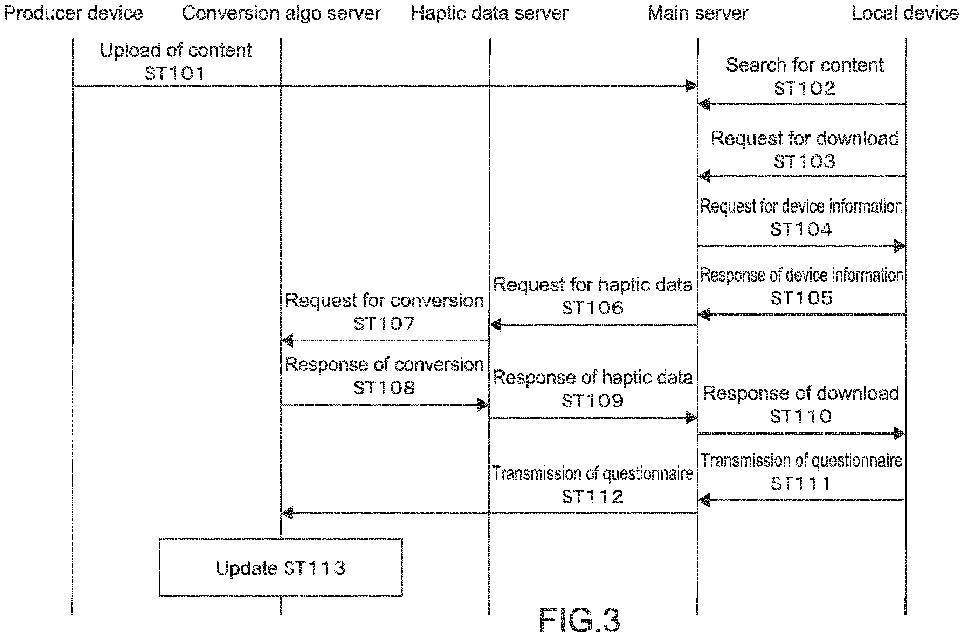

Fig. 3 is a sequence diagram showing conversion of a haptic signal.

As shown in Fig. 3, the producer uploads content to the main server 2 via the producer device 1 (Step 101). Further, in Step 101, the content includes producer device information. Note that in Fig. 3 the content indicates the content uploaded in Step 101 unless otherwise especially described.

The user searches for the content in the main server 2 via the local device 3 (Step 102). The user requests download of desired content (Step 103).

The main server 2 requests local device information of the local device 3 in response to the download request for the content (Step 104).

The local device 3 transmits the local device information in response to the request (Step 105).

Fig. 4 is a table showing an example of the device information.

In Step 101 and Step 104, the producer device information and the local device information shown in Fig. 4 are supplied to the main server 2. For example, whether a vibration function implemented in the producer device 1 is provided by a linear vibration actuator or an eccentric motor, position information at which a vibration device such as the linear vibration actuator or the eccentric motor is mounted, a behavior when a different device is used, and the like are supplied.

The main server 2 requests the haptic data server 4 to transmit the haptic data (Step 106).

The haptic data server 4 requests the conversion algo server 5 to convert the haptic signal in response to the request of the main server 2 (Step 107). The conversion algo server 5 converts the requested haptic signal on the basis of the producer device information and the local device information (Step 108).

In this embodiment, if the conversion algo server 5 has performed conversion (update) of a corresponding haptic signal, Step 107 and Step 108 are executed. In other words, if the haptic signal has been already converted and update (conversion) has not been performed, Step 107 and Step 108 are not executed, and Step 109 is executed.

The haptic data server 4 supplies the converted haptic signal to the main server 2 (Step 109). The main server 2 downloads the converted haptic signal in response to the download request of Step 103 (Step 110).

The user transmits a questionnaire of the haptic effect of the content via the local device 3 (Step 111). The transmitted questionnaire is supplied to the conversion algo server 5 (Step 112). The conversion algo server 5 converts a parameter of the haptic signal of the content on the basis of the answered questionnaire result (Step 113).

In this embodiment, the questionnaire result of the user is held in the main server 2 for each user. For example, the answer of the user is associated with the content and is fed back to the haptic data conversion by the conversion algo server 5.

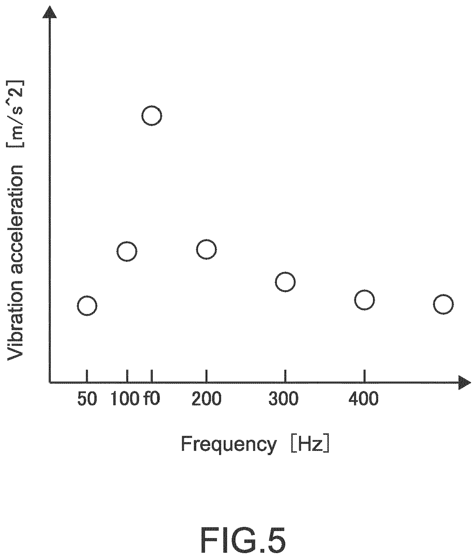

Fig. 5 is a graph showing vibration characteristics of the device. Fig. 5 shows a graph showing an example of the vibration characteristics of the device (producer device 1 or local device 3), in which the vertical axis represents a vibration acceleration and the horizontal axis represents a frequency.

In this embodiment, in order to convert the parameter of the haptic signal, the conversion unit 12 estimates vibration characteristics from the device information. In other words, the conversion unit 12 converts the parameter of the haptic signal on the basis of the vibration characteristics of the producer device 1 and the vibration characteristics of the local device 3.

Further, in this embodiment, in order to calculate values necessary for the conversion, the vibration characteristics of the producer device 1 and the local device 3 are grouped into the following patterns.

For example, the bandwidth of f0, which is the peak of the vibration acceleration, is grouped into three types.
Type 1: 0 to 100 Hz
Type 2: 100 to 200 Hz
Type 3: 200 Hz or more

For example, the case of the vibration characteristics shown in Fig. 5 is grouped as the type 2.

Further, the broadband acceleration in the three types described above is defined as follows.

In the case of the type 1, a value obtained when (vibration acceleration at 500 Hz + vibration acceleration at 300 Hz)/2 is assumed as a broadband acceleration.

In the case of the type 2, a value obtained when (vibration acceleration at 500 Hz + vibration acceleration at 400 Hz)/2 is assumed as a broadband acceleration.

In the type 3, a broadband acceleration is not defined.

Note that the grouping method is not limited, and any grouping may be performed.

Note that the estimation of the vibration characteristics may be performed by the main server 2, or the conversion algo server 5 may include an estimation unit that estimates the vibration characteristics.

Fig. 6 is a graph showing conversion examples for the producer device 1 and the local device 3. In Fig. 6, the vertical axis represents broadband acceleration/f0 acceleration, and the horizontal axis represents f0 frequency/f0 frequency of the producer device 1.

For example, coordinates of a triangle 20 indicating the producer device information are (broadband acceleration of producer device 1/f0 acceleration of producer device 1, f0 frequency of producer device 1/f0 frequency of producer device 1 (= 1)). Similarly, coordinates of a circle indicating the local device information are (broadband acceleration of local device 3/f0 acceleration of local device 3, f0 frequency of local device 3/f0 frequency of producer device 1).

As shown in Fig. 6, in this embodiment, differences between the producer device information (triangle 20) and five pieces of local device information (circle 21, circle 22, circle 23, circle 24, and circle 25) are classified into five patterns.

The pattern A and the pattern C are patterns in which the broadband acceleration/f0 acceleration is the same, and the f0 frequency in f0 frequency/f0 frequency of the producer device 1 is different.

The pattern B and the pattern D are patterns in which the broadband acceleration/f0 acceleration is different, and the f0 frequency in f0 frequency/f0 frequency of the producer device 1 is the same.

The pattern E is a pattern in a case where the broadband acceleration of the local device 3 is 0, that is, a case of a narrow-bandwidth linear resonant actuator (LRA) or an eccentric motor.

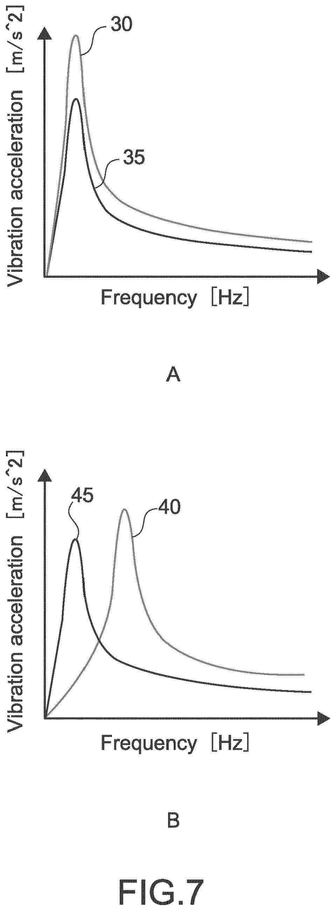

The conversion unit 12 converts the haptic signal for each of the patterns described above. The conversion method for each pattern will be described with reference to Figs. 7 to 9.

Fig. 7 is a graph showing conversion examples of the pattern A and the pattern C. A of Fig. 7 and B of Fig. 7 show examples of the vibration characteristics of the producer device 1 and the local device 3 in the pattern A and the pattern C.

A of Fig. 7 is a graph showing the case where the vibration characteristics of the producer device 1 (graph 30) and the vibration characteristics of the local device 3 (graph 35) have the same f0 frequency.

As shown in A of Fig. 7, if the graph 30 and the graph 35 are different in the f0 acceleration and the broad bandwidth, the conversion unit 12 converts the f0 accelerations to have the same value by equalizing or the like. Further, the conversion unit 12 converts the entire broad bandwidth as much as the above conversion of the f0 accelerations by equalizing or the like.

B of Fig. 7 is a graph showing the case where the vibration characteristics of the producer device 1 (graph 40) and the vibration characteristics of the local device 3 (graph 45) are different in type (the above-mentioned types 1 to 3).

As shown in B of Fig. 7, if the f0 frequency of the graph 40 has the type 2 and the f0 frequency of the graph 45 has the type 1, that is, if the f0 frequencies are shifted, the conversion unit 12 converts the vibration characteristics by the difference of the f0 frequency by pitch shifting. In this case, the upper limit of pitch shifting may be set for each of the type 1 and type 2. For example, in the case of the conversion by pitch shifting, there is a possibility that the waveform of the vibration characteristics of the local device 3 loses its shape or a merit (feature or advantage) of the haptic effect that can be expressed by the local device 3 is lost. Hence, the upper limit of pitch shifting, such as conversion up to 100 Hz by pitch shifting, may be set.

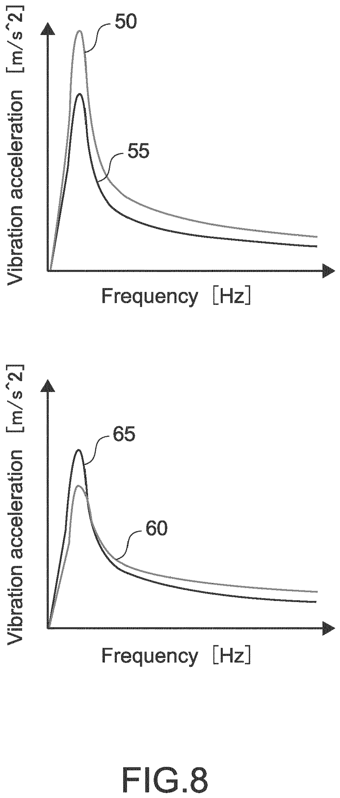

Fig. 8 is a graph showing conversion examples of the pattern B and the pattern D. A of Fig. 8 and B of Fig. 8 show examples of the vibration characteristics of the producer device 1 (graphs 50 and 60) and the local device 3 (graphs 55 and 65) in the pattern B and the pattern D.

Since the f0 frequency is the same in the pattern B and the pattern D, the conversion unit 12 does not perform conversion by pitch shifting. Further, as shown in A of Fig. 8 and B of Fig. 8, if the graph 50 (60) and the graph 55 (65) are different in the f0 acceleration and the broad bandwidth, the conversion unit 12 converts the f0 accelerations to have the same value by equalizing or the like. Further, the conversion unit 12 converts the entire broad bandwidth as much as the above conversion of the f0 accelerations by equalizing or the like.

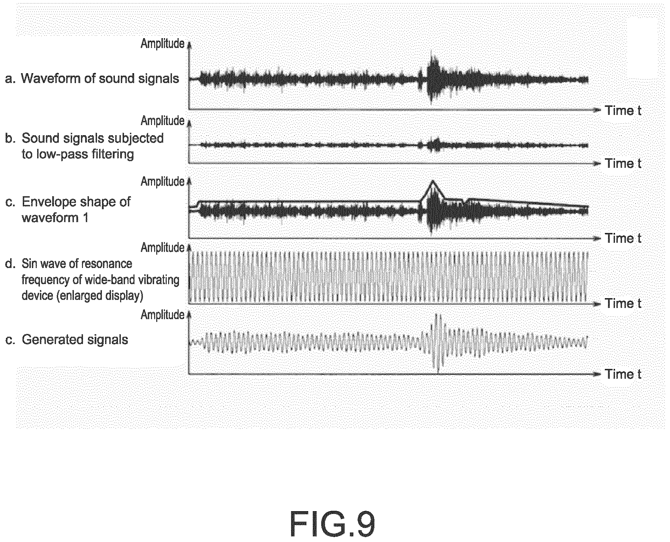

Fig. 9 is a graph showing a conversion example of the pattern E.

In Fig. 9, the conversion unit 12 calculates an effective value of the vibration characteristics for each fixed section, and performs conversion on the basis of an envelope shape of the calculated vibration characteristics. Further, the conversion unit 12 converts the f0 accelerations to have the same value by equalizing or the like.

Note that the specific conversion processing by the conversion unit 12 in Fig. 9 is described in WO 2016/136934 (paragraphs [0108] to [0126] of the specification, Fig. 19, and the like of WO 2016/136934).

Note that the conversion method is not limited, and the haptic signal may be converted by methods other than pitch shifting and equalizing.

Fig. 10 is a diagram showing specific examples of the questionnaire.

A of Fig. 10 shows questionnaires regarding the conversion of the f0 frequency and the conversion of the f0 acceleration described above.

As shown in A of Fig. 10, in this embodiment, inquiries for converting parameters of the haptic signal are presented as questionnaires to a user. For example, as a questionnaire regarding the conversion of the f0 frequency and the f0 acceleration, an inquiry "How was the strength?" is presented to a user by five levels (star 70) .

When the user gives an answer of low evaluation (e.g., one star), the conversion unit 12 converts the f0 acceleration, and then converts the f0 acceleration. Specifically, the conversion unit 12 converts a conversion coefficient of the peak acceleration and a transfer coefficient of the peak frequency.

Further, as shown in A of Fig. 10, as a questionnaire regarding the conversion of a questionnaire of the broadband acceleration, an inquiry "Was the vibration expression rich?" is presented to a user. The conversion unit 12 converts the conversion coefficient of the broadband acceleration on the basis of a questionnaire result of the user.

The vibration expression includes various haptic effects recognized by the user. A sense of feeling of a human differs depending on frequencies. For example, in general, a sense of feeling such as soft at 0 to 30 Hz, metallic (hard) at 300 Hz or more, a shock by a gun or the like at 60 to 80 Hz, vibrations when a vehicle is running at 150 to 300 Hz, an explosion at 60 to 100 Hz, or an UI at 150 to 300 Hz, is generated.

In other words, the questionnaire on the lower side in A of Fig. 10 is a questionnaire as to whether those vibration expressions can be sufficiently recognized or not. In addition to such a questionnaire, for example, a questionnaire capable of further limiting the frequency may be presented to the user as an inquiry of the questionnaire, such as "Was soft vibration expression rich?" or "Was metallic vibration expression rich?"

B of Fig. 10 is a diagram showing specific examples of a questionnaire corresponding to the haptic data.

In B of Fig. 10, an inquiry of a questionnaire in the content of the vibration data type and the vibration pattern type is presented. For example, a questionnaire regarding the vibration expression in a specific scene, such as "How was the scene of the gun?" or "How was the scene of the vehicle?", is presented.

In this case, the conversion unit 12 converts the f0 frequency and the f0 acceleration for the answer regarding the scene of the gun. Further, the conversion unit 12 converts the broadband acceleration for the answer regarding the scene of the vehicle.

Note that, in the case of the vibration track type, the vibration data is mixed down into one, but it may be separated by a sound separation technology or the like to perform conversion for each scene.

C of Fig. 10 shows questionnaires regarding parameters other than the parameters of the haptic signal.

As shown in C of Fig. 10, a questionnaire as to whether the vibration is matched with the details of the content, such as sound and video, may be presented. For example, a questionnaire such as "Were sound and vibration precisely matched with each other?" or "Were video and vibration precisely matched with each other?" is presented. The conversion unit 12 converts the delay of the vibration with respect to the sound or the delay of the vibration with respect to the video on the basis of the answer of the questionnaire.

D of Fig. 10 shows a questionnaire regarding parameters other than the parameters of the haptic signal.

As shown in D of Fig. 10, a questionnaire as to whether the strength of the vibration is sufficient for the volume of the sound is presented. For example, if the user feels a weak vibration with respect to a large sound volume, the user answers the questionnaire with low evaluation and transmits the questionnaire. The conversion unit 12 converts the volume of the entire vibration on the basis of the answer of the questionnaire. In other words, the conversion unit 12 perform conversion such that the sound and the vibration are balanced.

Note that the conversion method based on the answer of the questionnaire is not limited, and any method such as pitch shifting or equalizing may be used for conversion. Further, the method of converting the coefficients is not limited, and conversion may be performed by division in five stages, or the degree of conversion may be controlled by machine learning or the like.

Further, the timing at which the user answers the questionnaire is not limited, and may be during the reproduction of the content. For example, it may be possible to evaluate in real time whether the vibration is strong or weak for a specific scene such as a vehicle scene. As a matter of course, whether to answer the questionnaire may be selected by the user. For example, it is also possible to select "Not now" to avoid answering the questionnaire.

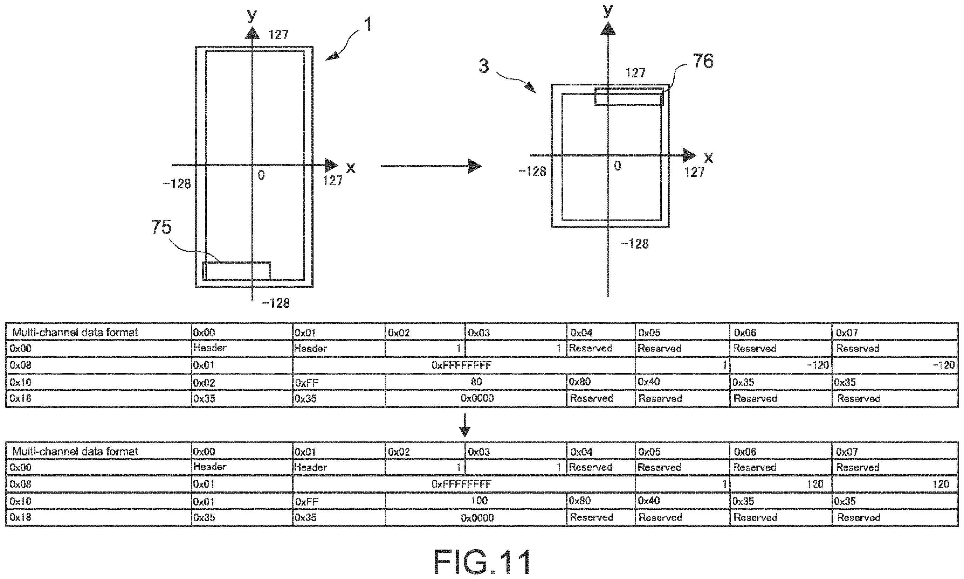

Fig. 11 is a diagram showing an example of the device information.

The example shown in Fig. 11 shows a case where the device type of the producer device 1 that produces content has one channel, and the device type of the local device 3 that downloads the content has one channel.

For example, as shown in Fig. 11, the device information of the producer device 1 and the device information of the local device 3, on each of which a single actuator 75 (76) is mounted, are shown in the table (lower diagram) of Fig. 11. In this case, the conversion unit 12 converts the haptic signal on the basis of the producer device information and the local device information.

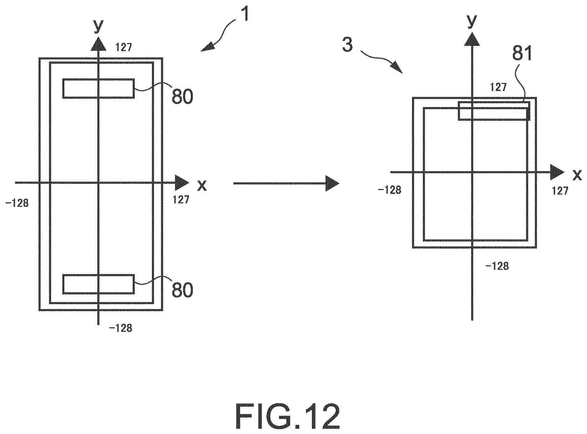

Fig. 12 is a diagram showing another example of the device information.

The example shown in Fig. 12 shows a case where two actuators 80 (two channels) are mounted on the producer device 1 and a single actuator 81 (one channel) is mounted on the local device 3. In this case, the conversion unit 12 mixes down two- channel producer device information into one-channel local device information to convert the haptic signal.

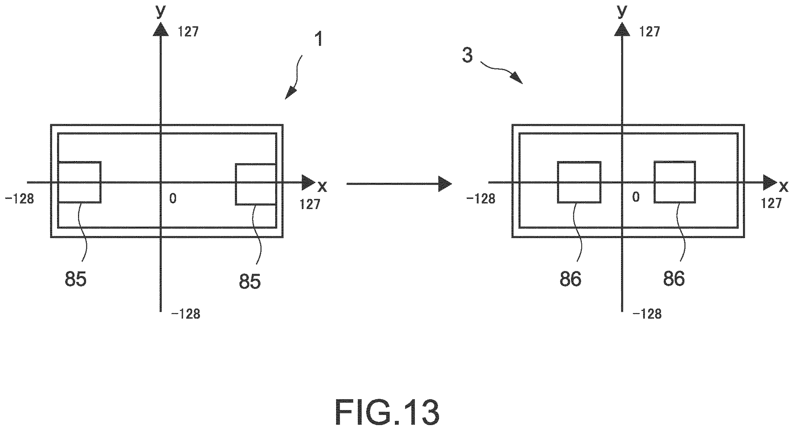

Fig. 13 is a diagram showing another example of the device information.

The example shown in Fig. 13 shows a case where the positions of two actuators 85 (86) mounted on the producer device 1 and the local device 3 are different.

In this case, the conversion unit 12 may convert the haptic signal on the basis of the position information of the actuators 85 (86) as the device information.

For example, if the user holds the producer device 1, the user can strongly feel vibration because the mounted actuators 85 are arranged at the ends. Further, in the local device 3, the user weakly feels vibration because the actuators 86 are separated from each other.

As a specific example, if the actuators 85 of the producer device 1 are disposed at the positions of (120, 0) (-120, 0), and the actuators 86 of the local device 3 are disposed at the positions of (60, 0) (-60, 0), the conversion unit 12 converts the volume of the entire vibration to 1.5 times to 2.0 times.

As described above, the conversion algo server 5 according to this embodiment converts the haptic signal on the basis of the local device information regarding the local device 3 that outputs the haptic signal. This makes it possible to exert a richer haptic effect.

In recent years, hardware of vibration devices has been diversified. On the other hand, the characteristics of the hardware devices differ from company to company, and content producers have to produce content corresponding to each local device, which is not realistic. Alternatively, a user who owns a local device needs to search for content corresponding to the user's device.

In the present technology, when a user downloads any content from cloud, the haptic data is converted according to the user's device. This makes it possible to solve the shortage of content such as content corresponding to the user's device. Further, this makes it possible to shorten the time required for conversion because the vibration data once converted is held by the cloud side, and to perform update on the conversion algo server by providing an evaluation system such as a questionnaire.

### <Other Embodiments>

The present technology is not limited to the embodiment described above, and can achieve various other embodiments.

In the embodiment described above, the conversion unit 12 updates the conversion of the haptic signal. In other words, the conversion unit 12 feeds back the history of the conversion of the haptic signal for each user and the questionnaire, to update the degree of conversion (for example, a coefficient of a parameter). The present technology is not limited to the above, and the conversion unit 12 may apply such feedback to the sound data. For example, vibration data may be generated from the sound data.

In the embodiment described above, the download including the haptic signal is performed once (Steps 106 to 110), that is, in a lump. The present technology is not limited to the above, and in the case of the vibration pattern type or the vibration data type, the download may be performed each time each piece of data or pattern is reproduced.

In the embodiment described above, the haptic signal is converted according to the device information or the questionnaire. The present technology is not limited to the above, and a setting as to whether to perform conversion may be performed by providing a flag for each piece of haptic data. For example, the setting may be performed by a content producer.

In the embodiment described above, the questionnaire result of the user is held for each content. The present technology is not limited to the above, and in the case of the vibration pattern type or the vibration data type, the questionnaire result of the user may be held for each piece of data or pattern.

In the embodiment described above, the local device 3 is equipped with a vibration device. The present technology is not limited to the above, and the present technology may be applied to a terminal, on which a vibration device is not mounted, such as a vehicle. For example, the vibration output by the haptic signal may be converted into sound to be output. Further, for example, when the user is viewing the content while walking or when the vehicle is traveling, various settings such as outputting a sound may be performed.

In the embodiment described above, the conversion is performed when the vibration characteristics of the producer device 1 and the local device 3 are different from each other. The present technology is not limited to the above, and whether to perform conversion may be determined by the user. For example, the haptic signal may be converted even if the user has the same device as the producer device 1.

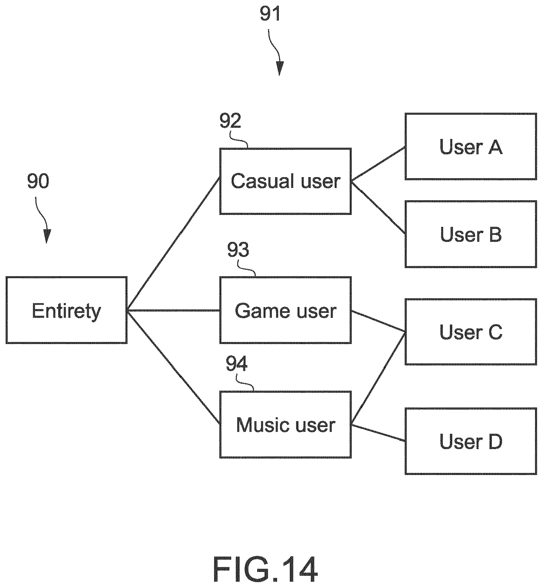

In the embodiment described above, the questionnaire result is held as a result of the entire content. The present technology is not limited to the above, and the questionnaire result may be held for each user or may be held for each attribute such as a country of the user, a group to which the user belongs, a region, or the like. Specific examples will be described in Fig. 14.

Fig. 14 is a diagram showing an example of a method of holding the questionnaire results. In Fig. 14, a user category 91 is associated with questionnaire results held by the entire content 90.

As shown in Fig. 14, results obtained when a user A, a user B, a user C, and a user D answer questionnaires are illustrated as a tree.

For example, in Fig. 14, a casual user 92, a game user 93, and a music user 94 are associated, as the user category 91, with the entire content 90. Further, the user questionnaire results of the user A and the user B belonging to the casual user 92, the user C belonging to the game user 93, and the user C and the user D belonging to the music user 94 are held in the respective categories.

For example, if content is downloaded to the local device of the user A belonging to the casual user 92, the conversion unit 12 may convert the haptic signal on the basis of the questionnaire result held in the casual user 92.

Further, for example, if content is downloaded to the local device of the user B and if a questionnaire result of the user B belonging to the casual user 92 is not present, a mean value of the questionnaire results held in the casual user 92 may be calculated, and a haptic signal may be converted on the basis of the mean value.

Further, for example, when content is downloaded to the local device of the user C and if a questionnaire result is not held in the game user 93, a questionnaire result of a high-order tree (e.g., entire content 90) may be referred to, or an attribute discretionarily referred to by each user may be selected.

Further, for example, when a questionnaire result held in the user category 91 is referred to, if the questionnaire result extends across a plurality of users, the mean value of the entire corresponding category may be referred to.

Further, for example, the questionnaire results that differ depending on the content category may also be held for the same user.

Further, for example, when content is downloaded to the local device of the user D, even if a questionnaire result of the user D already exists, the questionnaire results held in the music user 94 may be referred to.

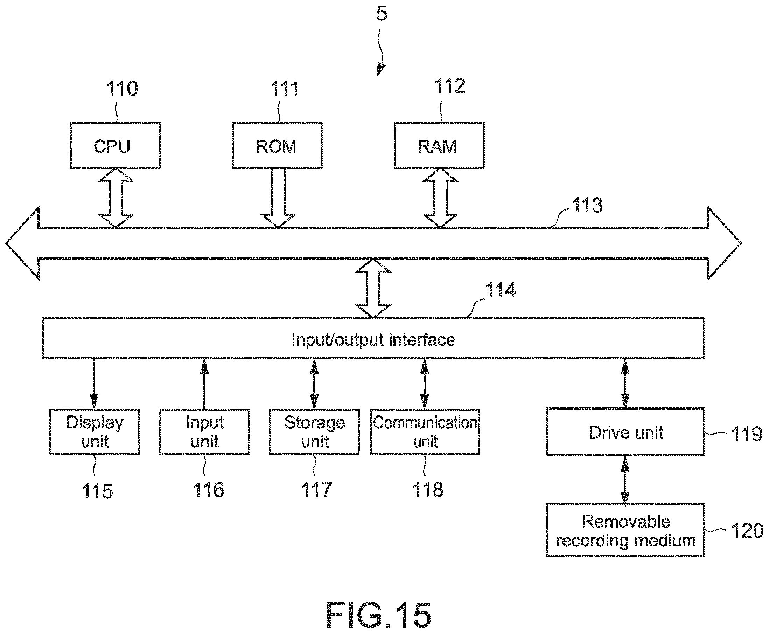

Fig. 15 is a block diagram showing a hardware configuration example of the conversion algo server 5.

The conversion algo server 5 includes a CPU 110, a ROM 111, a RAM 112, an input/output interface 114, and a bus 113 that connects those components to each other. A display unit 115, an input unit 116, a storage unit 117, a communication unit 118, and a drive unit 119, and the like are connected to the input/output interface 114.

The display unit 115 is, for example, a display device using liquid crystal, electro-luminescence (EL), or the like. The input unit 116 is, for example, a keyboard, a pointing device, a touch panel, or another operation device. If the input unit 116 includes a touch panel, the touch panel may be integrated with the display unit 115.

The storage unit 117 is a nonvolatile storage device and is, for example, an HDD, a flash memory, or another solid-state memory. The drive unit 119 is, for example, a device capable of driving a removable recording medium 120 such as an optical recording medium or a magnetic recording tape.

The communication unit 118 is a modem, a router, or another communication device that can be connected to a LAN, a WAN, or the like for communicating with other devices. The communication unit 118 may communicate using wires or radios. The communication unit 118 is often used separately from the conversion algo server 5.

In this embodiment, the communication unit 118 allows communication with other devices via the network.

The information processing by the conversion algo server 5 having the hardware configuration as described above is implemented in cooperation with the software stored in the storage unit 117, the ROM 111, or the like, and the hardware resource of the conversion algo server 5. Specifically, the control method according to the present technology is implemented when a program stored in the ROM 111 or the like and configuring the software is loaded into the RAM 112 and then executed.

The program is installed in the conversion algo server 5, for example, through the recording medium 120. Alternatively, the program may be installed in the conversion algo server 5 via a global network or the like. In addition, any non-transitory computer-readable storage medium may be used.

The control method and the program according to the present technology may be executed, and the conversion unit according to the present technology may be constructed, by linking a computer mounted on a communication terminal with another computer capable of communicating via a network or the like.

In other words, the information processing apparatus, the information processing method, and the program according to the present technology can be performed not only in a computer system formed of a single computer, but also in a computer system in which a plurality of computers operates cooperatively. Note that, in the present disclosure, the system refers to a set of components (such as apparatuses and modules (parts)) and it does not matter whether all of the components are in a single housing. Thus, a plurality of apparatuses accommodated in separate housings and connected to each other through a network, and a single apparatus in which a plurality of modules is accommodated in a single housing are both the system.

Execution of the information processing apparatus, the information processing method, and the program according to the present technology by the computer system includes, for example, both a case in which the conversion of the haptic signal, the output of the haptic signal, and the like are performed by a single computer; and a case in which the respective processes are performed by different computers. Further, the execution of each process by a predetermined computer includes causing another computer to perform a portion of or all of the process and obtaining a result thereof.

In other words, the information processing apparatus, the information processing method, and the program according to the present technology are also applicable to a configuration of cloud computing in which a single function is shared and cooperatively processed by a plurality of apparatuses through a network.

The configurations of the conversion unit, the questionnaire acquisition unit, and the like; the control flow of the communication system; and the like described with reference to the respective figures are merely embodiments, and any modifications may be made thereto without departing from the spirit of the present technology. In other words, any other configurations or algorithms for purpose of practicing the present technology may be adopted.

Note that the effects described in the present disclosure are merely illustrative and not restrictive, and other effects may be obtained. The above description of the plurality of effects does not necessarily mean that these effects are simultaneously exhibited. It means that at least one of the above-mentioned effects can be obtained depending on the conditions and the like, and of course, there is a possibility that an effect not described in the present disclosure can be exhibited.

At least two of the features among the features of the embodiments described above can also be combined. In other words, various features described in the respective embodiments may be combined discretionarily regardless of the embodiments.

Note that the present technology may also take the following configurations.
(1) An information processing apparatus, including
   a conversion unit that converts a haptic signal on the basis of device information regarding a haptic device that outputs the haptic signal.
(2) The information processing apparatus according to (1), in which
   the device information includes a parameter regarding the haptic signal that can be output by the haptic device.
(3) The information processing apparatus according to (2), in which
   the parameter includes at least one of a peak frequency of the haptic device, a peak acceleration of the haptic device, or a broadband acceleration of the haptic device.
(4) The information processing apparatus according to (3), in which
   the conversion unit converts the haptic signal on the basis of the device information and another device information regarding another haptic device that has produced content including the haptic signal.
(5) The information processing apparatus according to (4), in which
   the other device information includes another parameter regarding the haptic signal that can be output by the other haptic device, and
   the other parameter includes at least one of a peak frequency of the other haptic device, a peak acceleration of the other haptic device, or a broadband acceleration of the other haptic device.
(6) The information processing apparatus according to (5), in which
   the conversion unit performs conversion, when the peak frequency of the haptic device and the peak frequency of the other haptic device are different from each other, such that the peak frequency of the haptic device coincides with the peak frequency of the other haptic device.
(7) The information processing apparatus according to (5), in which
   the conversion unit performs conversion, when the peak acceleration of the haptic device and the peak acceleration of the haptic signal are different from each other, such that the peak acceleration of the haptic device coincides with the peak acceleration of the other haptic device.
(8) The information processing apparatus according to (5), in which
   the conversion unit performs conversion, when the broadband acceleration of the haptic device and the broadband acceleration of the haptic signal are different from each other, such that the broadband acceleration of the haptic device coincides with the broadband acceleration of the other haptic device.
(9) The information processing apparatus according to (1), in which
   the conversion unit converts the haptic signal on the basis of a questionnaire regarding the converted haptic signal.
(10) The information processing apparatus according to (9), in which
   the questionnaire is held together with an attribute of a user who has answered the questionnaire, and
   the conversion unit converts the haptic signal on the basis of a questionnaire result held for each attribute.
(11) The information processing apparatus according to (10), in which
   the attribute includes at least one of content including the haptic signal, the user, a group to which the user belongs, or a region.
(12) The information processing apparatus according to (9), in which
   the questionnaire includes a questionnaire regarding a specific scene of content including the haptic signal.
(13) The information processing apparatus according to (12), in which
   the scene includes a scene regarding a vibration expression provided by the haptic device.
(14) The information processing apparatus according to (13), in which
   the questionnaire presents whether or not a delay is caused between the specific scene and the vibration expression to a user.
(15) The information processing apparatus according to (1), in which
   the device information includes position information of a vibration device that is mounted on the haptic device.
(16) The information processing apparatus according to (15), in which
   the conversion unit converts the haptic signal on the basis of the position information.
(17) An information processing method, which is executed by a computer system, the method including
   converting a haptic signal on the basis of device information regarding a haptic device that outputs the haptic signal.
(18) A program, which causes a computer system to execute
   converting a haptic signal on the basis of device information regarding a haptic device that outputs the haptic signal.

### Reference Signs List

- 1: producer device
- 3: local device
- 5: conversion algo server
- 12: conversion unit
- 100: haptic signal conversion system

## Claims

1. An information processing apparatus, comprising
a conversion unit that converts a haptic signal on a basis of device information regarding a haptic device that outputs the haptic signal.

2. The information processing apparatus according to claim 1, wherein
the device information includes a parameter regarding the haptic signal that can be output by the haptic device.

3. The information processing apparatus according to claim 2, wherein
the parameter includes at least one of a peak frequency of the haptic device, a peak acceleration of the haptic device, or a broadband acceleration of the haptic device.

4. The information processing apparatus according to claim 3, wherein
the conversion unit converts the haptic signal on a basis of the device information and another device information regarding another haptic device that has produced content including the haptic signal.

5. The information processing apparatus according to claim 4, wherein
the other device information includes another parameter regarding the haptic signal that can be output by the other haptic device, and
the other parameter includes at least one of a peak frequency of the other haptic device, a peak acceleration of the other haptic device, or a broadband acceleration of the other haptic device.

6. The information processing apparatus according to claim 5, wherein
the conversion unit performs conversion, when the peak frequency of the haptic device and the peak frequency of the other haptic device are different from each other, such that the peak frequency of the haptic device coincides with the peak frequency of the other haptic device.

7. The information processing apparatus according to claim 5, wherein
the conversion unit performs conversion, when the peak acceleration of the haptic device and the peak acceleration of the haptic signal are different from each other, such that the peak acceleration of the haptic device coincides with the peak acceleration of the other haptic device.

8. The information processing apparatus according to claim 5, wherein
the conversion unit performs conversion, when the broadband acceleration of the haptic device and the broadband acceleration of the haptic signal are different from each other, such that the broadband acceleration of the haptic device coincides with the broadband acceleration of the other haptic device.

9. The information processing apparatus according to claim 1, wherein
the conversion unit converts the haptic signal on a basis of a questionnaire regarding the converted haptic signal.

10. The information processing apparatus according to claim 9, wherein
the questionnaire is held together with an attribute of a user who has answered the questionnaire, and
the conversion unit converts the haptic signal on a basis of a questionnaire result held for each attribute.

11. The information processing apparatus according to claim 10, wherein
the attribute includes at least one of content including the haptic signal, the user, a group to which the user belongs, or a region.

12. The information processing apparatus according to claim 9, wherein
the questionnaire includes a questionnaire regarding a specific scene of content including the haptic signal.

13. The information processing apparatus according to claim 12, wherein
the scene includes a scene regarding a vibration expression provided by the haptic device.

14. The information processing apparatus according to claim 13, wherein
the questionnaire presents whether or not a delay is caused between the specific scene and the vibration expression to a user.

15. The information processing apparatus according to claim 1, wherein
the device information includes position information of a vibration device that is mounted on the haptic device.

16. The information processing apparatus according to claim 15, wherein
the conversion unit converts the haptic signal on a basis of the position information.

17. An information processing method, which is executed by a computer system, the method comprising
converting a haptic signal on a basis of device information regarding a haptic device that outputs the haptic signal.

18. A program, which causes a computer system to execute
converting a haptic signal on a basis of device information regarding a haptic device that outputs the haptic signal.
